# EUROPÄISCHE PATENTSCHRIFT

(11) **EP 3 377 257 B1**
(45) Veröffentlichungstag und Bekanntmachung des Hinweises auf die Patenterteilung: **30.10.2019**
(21) Anmeldenummer: 17800761.3
(22) Anmeldetag: 07.11.2017
(51) Int. Cl.: B23B 31/20, G01M 3/40

(54) **ANGETRIEBENES WERKZEUG**
DRIVEN TOOL
OUTIL ENTRAÎNÉ

(30) Priorität: 30.11.2016 DE 102016123132
(43) Veröffentlichungstag der Anmeldung: 26.09.2018
(73) Patentinhaber: EWS Weigele GmbH & Co. KG, 73066 Uhingen (DE)
(72) Erfinder: WEIGELE, Frank, 73061 Ebersbach a. d. Fils (DE); WEIGELE, Matthias, 73257 Köngen (DE)
(74) Vertreter: Baur & Weber Patentanwälte PartG mbB
(86) Internationale Anmeldenummer: PCT/EP2017/078411
(87) Internationale Veröffentlichungsnummer: WO 2018/099697

(56) Entgegenhaltungen:
- DE-B3-102014 007 499
- US-A- 4 845 472
- US-A- 5 922 941
- US-A1- 2008 016 950
- US-A1- 2016 250 730

## Beschreibung

Die Erfindung betrifft ein angetriebenes Werkzeug gemäß dem Oberbegriff des Anspruchs 1, insbesondere ein angetriebenes Werkzeug in einem Revolver oder einer Werkzeugscheibe zur Aufnahme von Bearbeitungswerkzeugen.

Angetriebene Werkzeuge sind aus dem allgemeinen Stand der Technik bekannt. Diese werden in einem Revolver oder einer Werkzeugscheibe eingesetzt. In angetriebenen Werkzeugen können Bearbeitungswerkzeuge, wie z. B. Bohrer oder dergleichen, über verschiedene Spannmittel gespannt werden. Ein Beispiel für ein Spannmittel ist in der DE 10 2005 019 136 A1 gezeigt. In dieser Schrift ist eine Vorrichtung zum Spannen eines Werkzeughalters beschrieben, die zum Schnellspannen in einer Aufnahme eines Werkzeugrevolvers einer Maschine verwendet wird. Der Werkzeughalter besitzt entlang seiner Zentrumsachse einen ein Werkzeug aufnehmenden Aufnahmebereich und einen Schaft, der in die Aufnahme des Werkzeugrevolvers oder einer Bearbeitungsspindel einsteckbar ist. Der Aufnahmebereich ist vom Schaft durch einen gemeinsamen Bund getrennt, der schaftseitig eine Präzisions-Planfläche zur Anlage an einer Ausrichtfläche des Revolvers aufweist. Der Schaft weist in seiner Umgangsfläche eine axial und zum Bund hin gerichtete Ausnehmung auf, die in Bundnähe in eine quer gerichtete Hinterschneidung mündet.

Generell werden derartige angetriebene Werkzeuge insbesondere zur spanenden Bearbeitung eingesetzt. Dabei hat es sich bewährt, angetriebene Werkzeuge in verschiedensten Variationen, d. h. gerade, abgewinkelt oder achsversetzt sowie in unterschiedlichen Bauformen wie bezüglich Schaftdimensionen oder der Befestigungsart auszuführen. Um das Bearbeitungswerkzeug während der Bearbeitung zu kühlen und/oder zu schmieren, wird Kühlmittel über den Revolver oder über eine externe Ankopplung in das angetriebene Werkzeug übergeben. Dabei kann es vorgesehen sein, dass Kühlmittel extern über ein Kühlmittelrohr und/oder intern über eine Spindel oder kombiniert zum angetriebenen Werkzeug zu geben.

Aus der DE 199 01 372 A1 wird ein Spannkopf zur Werkzeughalterung mit wenigstens einer Anschlagfläche zur definierten Positionierung eines zu positionierenden Gegenstands, beispielsweise eines Werkzeugschaftes, vorgeschlagen, wobei im Spannkopf wenigstens eine, in der Anschlagfläche ausmündende, durch den positionierten Gegenstand verschlossene Leitung für ein Säuberungsmedium, wie Pressluft und ein Sensor zur Messung der Dichtigkeit des Leitungsverschlusses vorgesehen sind. Demnach soll eine schnelle Antwort der Sensoreinheit auf einen präzisen Sitz des zu positionierenden Gegenstandes möglich sein. Dies wird dadurch erreicht, dass die Sensoreinheit einen in der Medienleitung beweglichen Körper umfasst, dessen Position den Leitungsquerschnitt beeinflusst.

In der DE 600 13 567 T2 ist eine Versorgungseinheit für eine Werkzeugspindel beschrieben, die ganz oder teilweise mit einer beweglichen Zugstange ausgerüstet ist, welche zum festen Einspannen des Werkzeugs axial in der Spindelachse verschiebbar ist. Zur Kühlung eines auf der Spindelachse angebrachten Rotors zum Antrieb der Spindelachse ist ein Fluid-Zufuhrsystem vorgesehen, wobei ein weiteres Fluid-Zufuhrsystem zur Kühlung des Werkzeugs vorhanden sein kann. Für diese Systeme weist die Versorgungseinheit mindestens einen Sensor auf, der feststellt, ob im Fluid-Zufuhrsystem eine Störung vorliegt.

Aus der DE 20 2014 104 802 U1 ist ein Werkzeughalter zur Aufnahme eines Werkzeugs mit seinem Werkzeugschaft bekannt, der mit einer Aufnahmebohrung zur Aufnahme des Werkzeugschaftes in einer vorbestimmten Axiallage, mit einer Dichtung am inneren Ende der Aufnahmebohrung und mit einer maschinenseitigen Kühlmittelzufuhr in eine Bohrung des Werkzeugschaftes versehen ist, wobei die Dichtung ein zumindest teilweise elastisch verformbares Dichtungselement aufweist. Desweiteren ist eine von außen zugängliche Kontrollbohrung vorgesehen, an der ein Sensor angeordnet sein kann.

In der US 5,922,941 wird eine Werkzeugmaschine angegeben, in der eine Werkzeugaufnahme innerhalb einer Antriebseinrichtung angeordnet ist. Das Gehäuse der Werkzeugmaschine wird durch eine Fluidzuführung, die in die Werkzeugaufnahme führt durchdrungen und zwischen der Antriebseinrichtung und der Werkzeugaufnahme ist eine Dichtung angeordnet. Im Falle des Versagens der Dichtung, kann Leckagefluid durch eine Leitung zu einer Sensoreinheit geleitet werden, wo die Leckage detektiert werden kann.

Die US 2008/016,950 A1 gibt eine Leckagedetektion an, die innerhalb einer Werkzeugaufnahme einer Maschine angeordnet ist. Die Werkzeugaufnahme weist einen antreibenden und einen angetriebenen Teil auf, die von einem die beiden Teile verbindenden Fluidkanal durchdrungen werden und über zwei Dichtungen voneinander getrennt sind. Im Falle einer Leckage innerhalb des angetriebenen Teils, wird das Leckagefluid von der Leckagedetektion erkannt.

In der DE 10 2005 021 112 A1 wird ein Werkzeugrevolver beschrieben. Der Werkzeugrevolver ist mit einem Gehäuse und einer Aufnahme für Werkzeuge aufweisenden Werkzeugscheibe ausgestattet, die am Gehäuse drehbar gelagert und relativ zu diesem in wählbare Winkeleinstellungen einstellbar ist sowie einen Innenraum aufweist, der eine Antriebseinrichtung enthält, mittels derer das Werkzeug antreibbar ist, das sich in einer in Arbeitsstellung befindlichen Aufnahme befindet. Desweiteren ist ein das Vorhandensein eines Fluids im Innenraum der Werkzeugscheibe signalisierender Sensor und/oder einen Abfluss von Fluiden aus dem Innenraum ermöglichende Drainageeinrichtung vorhanden.

Insbesondere die letztgenannte Druckschrift rät einen Fachmann dazu an, Maßnahmen vorzusehen, um den Eintritt von Fluiden in den Innenraum der Werkzeugscheibe bewusst in Kauf zu nehmen und dann entsprechend Abhilfe zu schaffen. Demnach wird eine Art Füllstandsanzeige geschaffen, die die Drainageeinrichtung betätigen kann.

Eine derartige Lösung ist jedoch nur an solchen Einsatzorten betriebssicher benutzbar, an denen mit dem Vorhandensein von Fluiden zu rechnen ist. Für Revolver und/oder Werkzeugscheiben, bei denen beispielsweise empfindliche Elektronik im Bereich des Innenraums vorgesehen werden soll, ist diese Lösung ungeeignet.

Es ist daher Aufgabe der Erfindung, ein angetriebenes Werkzeug zu schaffen, das bezüglich Fluidbelastung einen zuverlässigen Schutz einer Antriebseinheit schafft.

Diese Aufgabe wird durch die Merkmale des Patentanspruchs 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung wird ein angetriebenes Werkzeug zur Aufnahme von Bearbeitungswerkzeugen in einer Antriebseinheit, insbesondere in einem Revolver, geschaffen, das ein Gehäuse, eine in dem Gehäuse angeordnete Spindel und eine am Gehäuse angeordnete Fluidzuführung aufweist, so dass ein Fluid eines Fluidkanals durch das Gehäuse über einen Fluidaustritt dem Bearbeitungswerkzeug zuführbar ist, wobei am Gehäuse ein Sensormodul angeordnet ist, das mit einer Sensoreinheit verbunden ist, die in einem Bereich außerhalb des Fluidkanals angeordnet ist und das Vorhandensein von Fluid außerhalb des Fluidkanals detektiert.

Demnach wird ein angetriebenes Werkzeug mit einem Feuchtigkeitssensor versehen, so dass ein an ein Bearbeitungswerkzeug übergebenes Fluid im Inneren des angetriebenen Werkzeugs detektiert wird. Somit soll entgegen den bisher bekannten Konzepten ein Eintritt von Fluiden in den Innenraum der Werkzeugscheibe vermieden werden. Bei eventuell austretendem Fluid kann nun eine entsprechende Reaktion ausgelöst werden. Dies kann beispielsweise das komplette Abschalten der Antriebseinheit oder zumindest das Signalisieren eines gefährlichen Zustands an einen Bediener umfassen. Aufgrund dieser Maßnahmen kann die Zuführung des Fluids unterbrochen werden, so dass kein Fluid mehr an das angetriebene Werkzeug weitergegeben wird. Das Fluid stellt typischerweise ein Kühlmittel für das Bearbeitungswerkzeug dar und kann darüber hinaus auch für eine Schmierung sorgen. Als Kühlmittel kommt sowohl eine Emulsion als auch die Verwendung eines Kühlmittels für die Minimalmengenschmierung oder auch Öl in Frage. Das angetriebene Werkzeug kann in unterschiedlichen Varianten verwendet werden, wobei hier typischerweise gerade, abgewinkelte, achsversetzte oder schwenkbare Varianten dem Fachmann bekannt sind. Auch unterschiedliche Bauformen bezüglich der Dimensionen des Schaftes sowie der Befestigungsart für unterschiedliche Ausführungen von Bearbeitungswerkzeugen wie Bohrer, Fräser oder dergleichen sind möglich. Unter dem Begriff "Antriebseinheit" wird ein Sternrevolver, ein Scheibenrevolver oder ein Kronenrevolver aber auch mehrere angetriebene Werkzeuge in einem Rad oder Kette sowie ein Einzelwerkzeug mit einem angetriebenen Werkzeug verstanden. Aufgrund von Verschleiß ist möglich, dass Fluid in die Lagerung sowie in den kompletten Hohlraum des Gehäuses gelangen kann. Das angetriebene Werkzeug wurde in diesem Fall mit Fluid beispielsweise als Kühlmedium geflutet werden, so dass es anschließend über das Gehäuse entlang der Spindel, beispielsweise in den Revolver austritt. Dadurch würde der Revolver bzw. die Antriebseinheit des Revolvers beschädigt werden, was hohe Reparaturkosten zur Folge hätte. Außerdem schützt die Erfindung das angetriebene Werkzeug selbst, denn eindringendes Fluid beispielsweise als Kühlmedium zerstört dessen Lager und/oder eventuell vorhandene Getriebe.

Gemäß einer Ausführungsform der Erfindung ist der mit dem Fluidkanal verbundene Fluidaustritt an der Spindel im Bereich der Aufnahme des Bearbeitungswerkzeugs ausgebildet, so dass über den Fluid dem Bearbeitungswerkzeug intern zuführbar ist.

Angetriebene Werkzeuge verfügen oftmals über interne Fluidzuführungen, die Fluid direkt im Bereich der Aufnahme in das Innere des Bearbeitungswerkzeug übergeben. Die Erfindung ist demnach bei dieser Art von angetriebenen Werkzeugen einsetzbar. Diese Fluidzuführung entspricht dabei einer Innenkühlung, die das Fluid über die Aufnahme des Bearbeitungswerkzeugs in das Innere des Bearbeitungswerkzeugs weitergibt.

Gemäß einer weiteren Ausführungsform der Erfindung ist der Fluidkanal zwischen Gehäuse und Spindel mittels eines Dichtsatzes abgedichtet.

Bei bekannten angetriebenen Werkzeugen umfasst der Dichtsatz typischerweise eine Primär- und eine Sekundärdichtung, wobei teilweise die Sekundärdichtung aus Platzgründen entfallen muss. Aufgrund der Relativbewegung zwischen Spindel und Dichtsatz treten Verschleißeffekte auf, wobei üblicherweise eine Leckagebohrung vorgesehen ist, durch die Fluid bei fehlerhaftem Primärdichtung austreten könnte. Hierbei ist jedoch zu beachten, dass bei zu hoher Leckage oder fehlender Sekundärdichtung das Fluid in das Getriebe, die Lagerung sowie in den kompletten Hohlraum des Gehäuses gelangen kann. Wie bereits erwähnt würde das angetriebene Werkzeug in diesem Fall mit Fluid geflutet werden, so dass eventuell die Antriebseinheit oder aber das angetriebene Werkzeug selbst beschädigt werden würde, was hohe Reparaturkosten zur Folge hätte. Mittels der Sensoreinheit benachbart zum Dichtsatz außerhalb des Fluidkanals kann austretendes Fluid frühzeitig detektiert werden, was das Eintreten des soeben geschilderten Reparaturfalls vollständig oder nahezu vollständig verhindern kann.

Gemäß einer weiteren Ausführungsform der Erfindung ist die Sensoreinheit auf der der Antriebseinheit zugewandten Seite des Fluidkanals angeordnet.

Die Anordnung der Sensoreinheit hinter dem Dichtsatz in Richtung der Antriebseinheit stellt eine bevorzugte Ausführungsform dar, da an dieser Stelle eventuell vorhandenes Fluid auf dem Weg durch das Gehäuse in Richtung des zu schützenden Revolvers oder der Werkzeugscheibe nachgewiesen werden kann.

Gemäß einer alternativen Ausführungsform der Erfindung ist die Sensoreinheit auf der der Antriebseinheit abgewandten Seite des Fluidkanals angeordnet.

Sollte jedoch an der oben beschriebenen Stelle kein geeigneter Platz für eine Sensoreinheit vorhanden sein, wäre es auch denkbar, die Sensoreinheit auf der gegenüber liegenden Seite in Richtung der Aufnahme des Bearbeitungswerkzeugs anzuordnen. Auch die Positionierung der Sensoreinheit an dieser Stelle wäre bei austretendem Fluid immer noch in der Lage, die Antriebseinheit zu schützen.

Gemäß einer weiteren alternativen Ausführungsform der Erfindung ist der mit dem Fluidkanal verbundene Fluidaustritt an der Außenseite des Gehäuses ausgebildet, so dass über den Fluid dem Bearbeitungswerkzeug extern zuführbar ist.

Angetriebene Werkzeuge übergeben oftmals Fluid auch von außerhalb an das Bearbeitungswerkzeug über externe Fluidzuführungen. Die Erfindung ist demnach bei dieser Art von angetriebenen Werkzeugen einsetzbar. Hier würde die Sensoreinheit zur Detektion eines Fluideintrittes von außen in das Gehäuse dienen.

In einer wiederum anderen Ausführungsform kann der Fluidkanal so ausgebildet sein, das Fluid dem Bearbeitungswerkzeug intern und extern zuführbar ist.

Oftmals ist jedoch sowohl eine Innen- als auch eine Außenkühlung vorzusehen, wobei der Fluidkanal dazu mit einer beiden Übergabestellen verbunden ist, die Fluid an das Bearbeitungswerkzeug zuführen. Die Erfindung ist demnach auch für ein angetriebenes Werkzeug mit interner und externer Fluidzuführung an das Bearbeitungswerkzeug einzusetzen.

Gemäß einer weiteren Ausführungsform der Erfindung umfasst das Sensormodul als ersten Sensor einen Flüssigkeitssensor und/oder einen Drucksensor.

Ein Flüssigkeitssensor kann beispielsweise über eine Widerstandsmessung die Anwesenheit von Fluid detektieren. Da das Fluid typischerweise druckbeaufschlagt übergeben wird, würde auch ein Drucksensor eine Detektion von Fluid ermöglichen. Beide Varianten, die sowohl einzeln oder in Kombination realisiert werden können, ermöglichen einen einfachen Aufbau des Sensormoduls, das darüber hinaus auch eine schnelle Reaktionszeit auf eintretendes Fluid bereitstellt.

Gemäß der Erfindung detektiert die Sensoreinheit darüber hinaus eine Drehbewegung der Spindel relativ zu dem Gehäuse.

Die Sensoreinheit des erfindungsgemäßen Werkzeugs ist dafür mit einem weiteren Sensor vorgesehen, der beispielsweise über eine magnetische Kopplung eine Drehbewegung der Spindel detektieren kann. Aufgrund dieses Signals ist es auf einfache Weise möglich, die Einsatzzeit des angetriebenen Werkzeugs und damit die Gefahr verschlissener Dichtsätze im Sensormodul zu überwachen und gegebenenfalls als Warnsignal an eine externe Stelle weiter zu leiten.

Gemäß weiteren Ausführungsformen der Erfindung ist das Sensormodul mit einer Abdeckung versehen sein.

Um das Sensormodul vor Umgebungseinflüssen am angetriebenen Werkzeug beim Einsatz zu schützen, ist es vorgesehen, wenigstens eine Abdeckung anzubringen, die das Sensormodul schützt. Ein vollständiges Verkapseln des Sensormoduls oder auch eine auf einfache Weise lösbare Befestigung der Abdeckung, um beispielsweise in das Innere des Sensormoduls zu Wartungszwecken zu gelangen, ist davon nicht ausgeschlossen.

Das Sensormodul kann eine Stromversorgung aufweisen. Des Weiteren kann eine Einrichtung zur Verarbeitung und/oder Speicherung von Signalen der Sensoreinheit vorgesehen sein und das Sensormodul kann eine vorzugsweise kabellose Datenübertragung, insbesondere mittels einer Bluetooth-Schnittstelle, ermöglichen.

Vorzugsweise ist das Sensormodul mit einer Batterie oder wieder aufladbaren Batterie versehen, so dass keine kabelgebundene Stromversorgung für das Sensormodul bereit gestellt werden muss. Die von der Sensoreinheit oder den Sensoreinheiten empfangenen Signale werden vorzugsweise mittels eines Prozessors oder dergleichen verarbeitet, wobei auch eine Speicherung der Daten möglich ist. Die Weitergabe der Daten an externe Stellen erfolgt besonders vorteilhaft ebenfalls kabellos, wobei hier der in der Industrie weit verbreitete Bluetooth-Standard verwendete werden könnte.

Gemäß einer weiteren Ausführungsform ist die Fluidzuführung auf der der Antriebseinheit zugewandten Seite des Gehäuses angeordnet.

Bei den bisher geschilderten Varianten der Erfindung wird Fluid sowohl über die Antriebseinheit oder über eine externe Ankopplung in das angetriebene Werkzeug übergeben. In bevorzugter Ausführungsform ist jedoch eine direkte Ankopplung zwischen Antriebseinheit und angetriebenem Werkzeug vorgesehen.

Die Erfindung wird nachfolgend unter Bezugnahme auf die Zeichnung näher erläutert. Es zeigt:
- Fig. 1: eine perspektivische Ansicht eines Sensormoduls und einer Sensoreinheit gemäß einer Ausführungsform der Erfindung,
- Fig. 2: eine Seitenansicht des Sensormoduls und der Sensoreinheit gemäß Fig. 1,
- Fig. 3: eine perspektivische Ansicht eines angetriebenen Werkzeugs gemäß der Erfindung,
- Fig. 4A: das angetriebene Werkzeug aus Fig. 3 in einer Frontansicht,
- Fig. 4B: das angetriebene Werkzeug aus Fig. 3 in einer ersten Schnittansicht,
- Fig. 5A: das angetriebene Werkzeug aus Fig. 3 in einer zweiten Frontansicht,
- Fig. 5B: das angetriebene Werkzeug aus Fig. 3 in einer weiteren Querschnittsansicht.

In den Figuren sind gleiche oder funktional gleich wirkende Bauelemente mit den gleichen Bezugszeichen versehen.

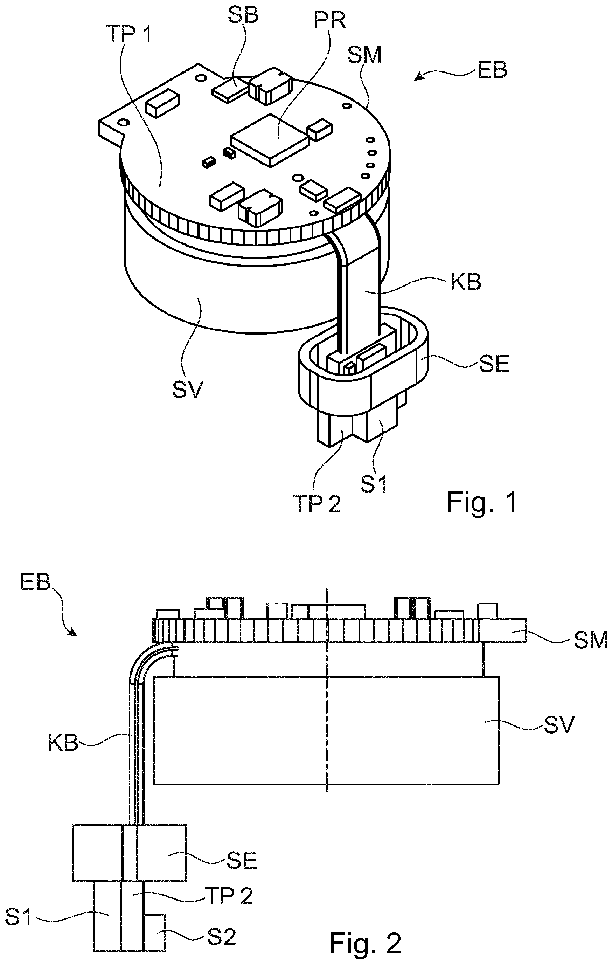

In Fig. 1 ist in einer perspektivischen Seitenansicht eine elektronische Baugruppe EB gezeigt, die auf einer ersten Trägerplatine TP1 ein Sensormodul SM umfasst, das mit einer Stromversorgung SV verbunden ist. Die Stromversorgung SV kann beispielsweise in Form einer Batterie oder eines wieder aufladbaren Akkumulators das Sensormodul SM über die erste Trägerplatine TP1 mit elektrischer Energie versorgen. Die erste Trägerplatine TP1 ist über ein Kabel KB mit einer zweiten Trägerplatine TP2 verbunden, die Bestandteil einer Sensoreinheit SE ist. Dazu weist die Sensoreinheit SE wenigstens einen ersten Sensor S1 auf, der auf der zweiten Trägerplatine TP2 angebracht ist. Die elektronischen Komponenten der Sensoreinheit SE werden über das Kabel KB vom Sensormodul aus versorgt, wobei Messsignale der Sensoreinheit SE sowie gegebenenfalls Steuersignale ebenfalls über das Kabel KB geführt sind. Bei dem Kabel KB kann es sich um ein Flachbandkabel, einzelne Adern oder eine bedruckte Folie handeln.

In Fig. 2 ist die elektronische Baugruppe EB nochmals in einer Seitenansicht gezeigt. Man erkennt, dass die Sensoreinheit SE noch einen weiteren oder zweiten Sensor S2 umfasst.

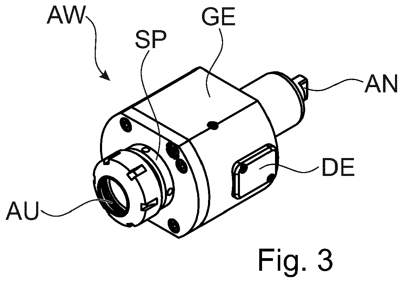

In Fig. 3 ist ein angetriebenes Werkzeug AW in einer perspektivischen Seitenansicht gezeigt. Das angetriebene Werkzeug AW umfasst auf der einen Seite einen Antrieb AN, der beispielsweise mittels einer Antriebseinheit eines Revolvers eine im Inneren eines Gehäuses GE befindliche Spindel SP antreibt. Gegenüberliegend zum Antrieb AN ist eine Aufnahme AU vorgesehen, in die ein Bearbeitungswerkzeug (nicht in Fig. 3 gezeigt) in fachüblicher Weise im angetriebenen Werkzeug AW befestigt werden kann. Bei dem Bearbeitungswerkzeug kann es sich typischerweise um einen Bohrer, Fräser oder dergleichen handeln. Zur Kühlung und/oder Schmierung des Bearbeitungswerkzeugs befindet sich auf der dem Antrieb AN zugewandten Seite des Gehäuses GE eine Fluidzuführung am angetriebenen Werkzeug AW, durch die beispielsweise eine Innenkühlung des Bearbeitungswerkzeugs möglich ist. Ebenso ist eine Außenkühlung über eine Kühlmittelabgabe am Gehäuse GE denkbar. Innen- bzw. Außenkühlung sind an sich bekannt. Die Fluidzuführung kann auch als externer Anschluss bereitgestellt werden.

Für die Erfindung wesentlich ist, dass unterhalb eines Deckels DE, der beispielsweise mit dem Gehäuse GE mittels Verschraubung verbunden ist, die im Zusammenhang mit Fig. 1 und 2 beschriebene elektronische Baugruppe EB angeordnet ist, um einen Nachweis von Fluid im Inneren des Gehäuses GE zu ermöglichen.

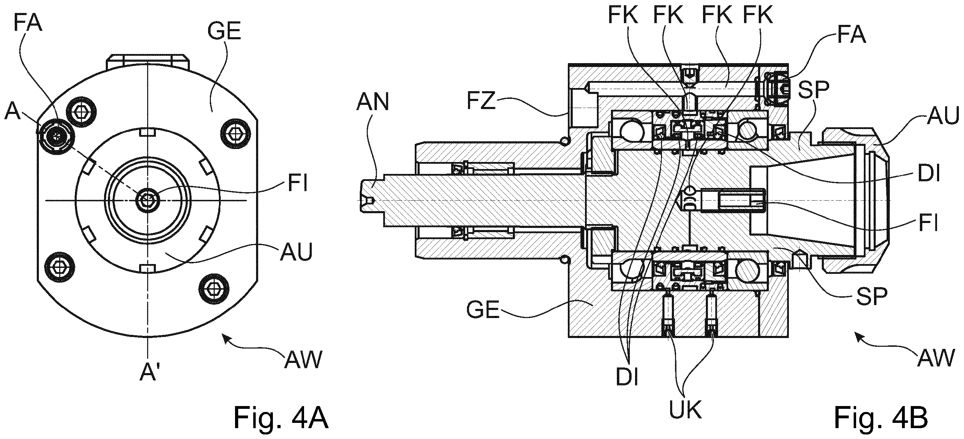

Unter Bezugnahme auf Fig. 4A ist die Frontansicht des angetriebenen Werkzeugs AW gezeigt. In Fig. 4A ist ein Schnitt A - A' eingezeichnet, der die Ebene der Querschnittsansicht gemäß Fig. 4B bestimmt.

Das angetriebene Werkzeug AW gemäß Fig. 4B zeigt den Weg eines Fluids von der Fluidzuführung FZ über Fluidkanäle FK in das Innere der Spindel SP, so dass das Fluid über die Fluidinnenkühlung FI an der Aufnahme AU in ein Bearbeitungswerkzeug geführt werden kann.

Anstelle der Fluidinnenkühlung FI kann auch eine Fluidaußenkühlung FA am Fluidkanal FK vorgesehen sein, die am Gehäuse GE eine Fluidübergabe an das Bearbeitungswerkzeug beispielsweise über ein Kühlmittelrohr ermöglicht. Hier würde die Sensoreinheit SE das Eintreten von Fluid in das Innere des Gehäuses GE detektieren. Optional können sowohl Fluidinnenkühlung FI als auch Fluidaußenkühlung FA vorgesehen sein.

Um den Fluidkanal FK ist auf der Spindel SP beiderseitig jeweils ein aus Primär- und Sekundärdichtung bestehender Dichtsatz DI angeordnet, der das Fluid vom Inneren des Gehäuses GE abdichtet. Aufgrund der Relativbewegung zwischen Spindel SP und Gehäuse GE wird jedoch nach längerer Einsatzzeit Verschleiß an dem Dichtsatz DI auftreten, so dass eventuell Fluid austreten könnte. Das austretende Fluid kann das Innere des Gehäuses über zwischen Primär- und Sekundärdichtung angeordnete Überlaufkanäle UK verlassen. Dabei ist es jedoch möglich, dass bei beispielsweise verschlissener Sekundärdichtung oder bei aufgrund von beengten Platzverhältnissen nicht vorhandener Sekundärdichtung Fluid in das Innere des Gehäuses GE und über das dem Antrieb AN zugewandte Ende in den Revolver oder die Werkzeugscheibe tritt.

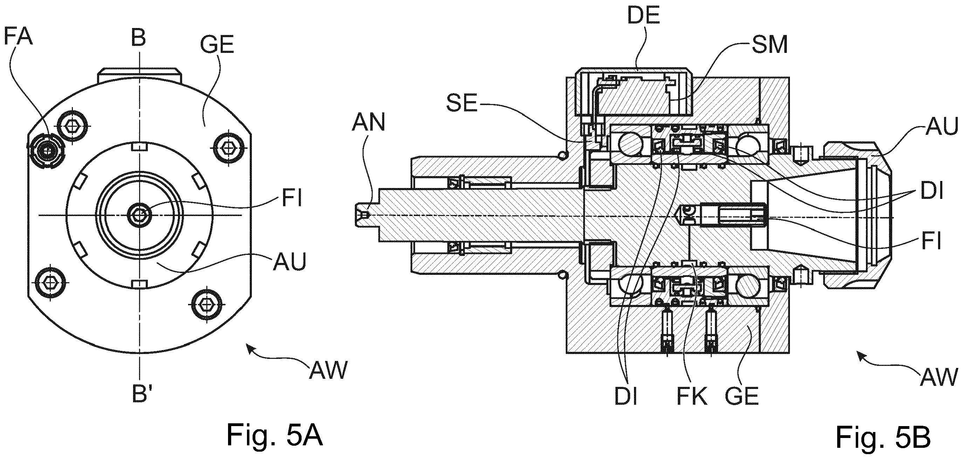

Der Nachweis von Fluid im Inneren des Gehäuses GE ist im Zusammenhang mit Fig. 5A und 5B genauer erläutert. In Fig. 5A ist wiederum eine Frontansicht des angetriebenen Werkzeugs AW gezeigt, wobei die eingezeichnete Linie B - B' eine Schnittebene definiert, die der Querschnittsansicht von Fig. 5B entspricht.

In Fig. 5B ist zu erkennen, dass die Sensoreinheit SE auf derjenigen Seite der Dichtungen DI angeordnet ist, die in Richtung des Antriebs AN weist. Die Sensoreinheit könnte in wiederum anderen Ausführungen jedoch auch auf der gegenüber liegenden Seite angeordnet sein. Eventuell austretendes Fluid an den Dichtungen DI würde über den ersten Sensor S1 der Sensoreinheit SE nachgewiesen werden und über das Kabel KB zum Sensormodul SM gelangen. Somit ist es möglich, dass ein auf dem Sensormodul angeordneter Prozessor PR (siehe dazu Fig. 1) die Signale der Sensoreinheit SE verarbeitet und über ein Schnittstellenbaustein SB eventuell vorhandenes Fluid an einen Bediener oder eine externe Weiterverarbeitungseinheit weiter gibt. Der Schnittstellenbaustein SB kann beispielsweise eine Bluetooth-Schnittstelle bilden.

Gemäß der Erfindung ist es daher möglich, die aufgrund längerer Einsatzzeiten gelegentlich entstehenden Abnutzungsschäden an den Dichtungen DI dahingehend zu überwachen, dass eventuell austretendes Fluid frühzeitig erkannt wird, so dass dieses nicht über das Innere des Gehäuses GE auf der Seite des Antriebs AN in Antriebseinheiten eines Revolvers oder einer Werkzeugscheibe gelangen kann, wo oftmals Schäden hervorgerufen werden, die mit hohen Reparaturkosten verbunden sind. Außerdem schützt die Erfindung die Werkzeugeinheit selbst, denn eindringendes Kühlmedium zerstört die Lager und/oder Getriebe.

Die Erfindung schafft hier Abhilfe, indem das Eintreten von Fluid in das Innere des Gehäuses GE zuverlässig nachweisbar ist. Dazu kann der erste Sensor S1 so ausgeführt sein, dass beispielsweise eine Unterscheidung zwischen zur Schmierung der Spindel SP vorhandenes Schmiermittel und dem zur Kühlung oder Schmierung vorgesehenem Fluid vorgenommen werden kann.

Der erste Sensor S1 kann als ein Flüssigkeitssensor und/oder als ein Drucksensor ausgebildet sein. Der erste Sensor S1 in Form eines Flüssigkeitssensors kann beispielsweise über eine Widerstandsmessung die Anwesenheit von Fluid im Gehäuse GE detektieren. Da das Fluid typischerweise druckbeaufschlagt übergeben wird, würde auch der erste Sensor S1 in Form eines Drucksensors eine Detektion von Fluid ermöglichen. Beide Varianten, die sowohl einzeln oder in Kombination realisiert werden können, ermöglichen einen einfachen Aufbau der Sensoreinheit SE, das darüber hinaus auch eine schnelle Reaktionszeit auf eintretendes Fluid bereitstellt.

Desweiteren ist es möglich, dass der zweite Sensor S2 über eine magnetische Kopplung die Drehung der Spindel SP relativ zum Gehäuse GE detektiert, so dass die Einsatzzeit des angetriebenen Werkzeugs AW zusätzlich überwacht werden kann.

## Patentansprüche

1. Angetriebenes Werkzeug zur Aufnahme von Bearbeitungswerkzeugen (AW) in einer Antriebseinheit (AN), insbesondere in einem Revolver, das ein Gehäuse(GE), ein in dem Gehäuse (GE) angeordnete Spindel (SP) und eine am Gehäuse (GE) angeordnete Fluidzuführung (FZ) aufweist, so dass ein Fluid eines Fluidkanals (FK) durch das Gehäuse (GE) über einen Fluidaustritt dem Bearbeitungswerkzeug (AW) zuführbar ist, wobei am Gehäuse (GE) ein Sensormodul (SM) angeordnet ist, das einen ersten Sensor (S1) umfasst und mit einer Sensoreinheit (SE) verbunden ist, die in einem Bereich außerhalb des Fluidkanals (FK) angeordnet ist und das Vorhandensein von Fluid außerhalb des Fluidkanals (FK) detektiert, **dadurch gekennzeichnet, dass** das Sensormodul (SM) wenigstens einen weiteren Sensor (S2) umfasst, wobei der weitere Sensor (S2) eine Drehbewegung der Spindel (SP) relativ zu dem Gehäuse (GE) detektieren kann.

2. Angetriebenes Werkzeug nach Anspruch 1, bei dem der mit dem Fluidkanal (FK) verbundene Fluidaustritt an der Spindel (SP) im Bereich der Aufnahme (AU) des Bearbeitungswerkzeugs (AW) ausgebildet ist, so dass über den Fluid dem Bearbeitungswerkzeug (AW) intern zuführbar ist.

3. Angetriebenes Werkzeug nach Anspruch 2, bei dem der Fluidkanal (FK) zwischen Gehäuse (GE) und Spindel (SP) mittels eines Dichtsatzes (DI) abgedichtet ist.

4. Angetriebenes Werkzeug nach Anspruch 3, bei dem die Sensoreinheit (SE) auf der der Antriebseinheit (AN) zugewandten Seite des Fluidkanals (FK) angeordnet ist.

5. Angetriebenes Werkzeug nach Anspruch 3, bei dem die Sensoreinheit (SE) auf der der Antriebseinheit (AN) abgewandten Seite des Fluidkanals (FK) angeordnet ist.

6. Angetriebenes Werkzeug nach Anspruch 1, bei dem der mit dem Fluidkanal (FK) verbundene Fluidaustritt an der Außenseite des Gehäuses (GE) ausgebildet ist, so dass über den Fluid dem Bearbeitungswerkzeug (AW) extern zuführbar ist.

7. Angetriebenes Werkzeug nach Anspruch 2 und 6, bei dem der Fluidkanal so ausgebildet ist, das Fluid dem Bearbeitungswerkzeug (AW) intern und extern zuführbar ist.

8. Angetriebenes Werkzeug nach einem der Ansprüche 1 bis 7, bei dem das Sensormodul (SM) als ersten Sensor einen Flüssigkeitssensor und/oder einen Drucksensor umfasst.

9. Angetriebenes Werkzeug nach einem der Ansprüche 1 bis 8, bei dem das Sensormodul (SM) mit einer Abdeckung versehen ist.

10. Angetriebenes Werkzeug nach einem der Ansprüche 1 bis 9, bei dem das Sensormodul (SM) eine Stromversorgung (SV) aufweist.

11. Angetriebenes Werkzeug nach einem der Ansprüche 1 bis 10, bei dem das Sensormodul (SM) eine Einrichtung zur Verarbeitung und/oder Speicherung von Signalen der Sensoreinheit umfasst.

12. Angetriebenes Werkzeug nach einem der Ansprüche 1 bis 11, bei dem das Sensormodul (SM) eine vorzugsweise kabellose Datenübertragung, insbesondere mittels einer Bluetooth-Schnittstelle, ermöglicht.

13. Angetriebenes Werkzeug nach einem der Ansprüche 1 bis 12, bei dem die Fluidzuführung (FZ) auf der der Antriebseinheit (AN) zugewandten Seite des Gehäuses (GE) angeordnet ist.

## Claims

1. Driven tool for receiving machining tools (AW) in a drive unit (AN), in particular in a turret, the driven tool comprising a housing (GE), a spindle (SP) arranged in the housing (GE) and a fluid supply (FZ) arranged on the housing (GE), such that a fluid of a fluid channel (FK) can be supplied through the housing (GE) to the processing tool (AW) via a fluid outlet, a sensor module (SM) being arranged on the housing (GE), which module has a first sensor (S1) and is connected to a sensor unit (SE) which is arranged in a region outside the fluid channel (FK) and detects the presence of fluid outside the fluid channel (FK), **characterized in that** the sensor module (SM) has at least one further sensor (S2), the further sensor (S2) being able to detect a rotational movement of the spindle (SP) relative to the housing (GE).

2. Driven tool according to claim 1, wherein the fluid outlet connected to the fluid channel (FK) is formed on the spindle (SP) in the region of the receptacle (AU) of the machining tool (AW) such that, via said outlet, the machining tool (AW) can be supplied with fluid internally.

3. Driven tool according to claim 2, wherein the fluid channel (FK) between the housing (GE) and spindle (SP) is sealed using a seal set (DI).

4. Driven tool according to claim 3, wherein the sensor unit (SE) is arranged on the side of the fluid channel (FK) that faces the drive unit (AN).

5. Driven tool according to claim 3, wherein the sensor unit (SE) is arranged on the side of the fluid channel (FK) that faces away from the drive unit (AN).

6. Driven tool according to claim 1, wherein the fluid outlet connected to the fluid channel (FK) is formed on the outer face of the housing (GE) such that, via said outlet, the machining tool (AW) can be supplied with fluid externally.

7. Driven tool according to claims 2 and 6, wherein the fluid channel is formed such that the machining tool (AW) can be supplied with the fluid internally and externally.

8. Driven tool according to any of claims 1 to 7, wherein the sensor module (SM) has a liquid sensor and/or a pressure sensor as the first sensor.

9. Driven tool according to any of claims 1 to 8, wherein the sensor module (SM) is provided with a cover.

10. Driven tool according to any of claims 1 to 9, wherein the sensor module (SM) comprises a power supply (SV).

11. Driven tool according to any of claims 1 to 10, wherein the sensor module (SM) has a device for processing and/or storing signals of the sensor unit.

12. Driven tool according to any of claims 1 to 11, wherein the sensor module (SM) makes a preferably wireless data transmission possible, in particular by means of a Bluetooth interface.

13. Driven tool according to any of claims 1 to 12, wherein the fluid supply (FZ) is arranged on the side of the housing (GE) that faces the drive unit (AN).

## Revendications

1. Outil motorisé pour recevoir des outils d'usinage (OU) dans une unité d'entraînement (UE), en particulier dans un pistolet, lequel outil présente un logement (LO), une broche (BR) disposée dans le logement (LO) et une alimentation en fluide (AF) disposée sur le logement (LO), afin qu'un fluide d'un canal de fluide (CF) puisse être amené à l'outil d'usinage à travers le logement (LO) par un dégagement de fluide, un module de capteur (MC) étant disposé sur le logement (LO), qui comprend un premier capteur (S1) et est relié à une unité de capteur (UC) qui est disposée dans une zone à l'extérieur du canal de fluide (CF) et qui détecte la présence de fluide à l'extérieur du canal de fluide (CF), **caractérisé en ce que** le module de capteur (SM) comprend au moins un capteur supplémentaire (S2), le capteur supplémentaire (S2) pouvant détecter un mouvement rotatif de la broche (BR) relativement au logement (LO).

2. Outil motorisé selon la revendication 1, dans lequel le dégagement de fluide relié au canal de fluide (CF) est formé sur la broche (BR) dans la zone du logement (ZL) de l'outil d'usinage (OU), afin que le fluide puisse être amené à l'intérieur de l'outil d'usinage (OU).

3. Outil motorisé selon la revendication 2, dans lequel le canal de fluide (CF) entre le logement (LO) et la broche (BR) est étanchéifié au moyen d'un kit d'étanchéité (KE).

4. Outil motorisé selon la revendication 3, dans lequel l'unité de capteur (UC) est disposée sur le côté du canal de fluide (CF) tourné vers l'unité d'entraînement (UE).

5. Outil motorisé selon la revendication 3, dans lequel l'unité de capteur (UC) est disposée sur le côté du canal de fluide (CF) opposé à l'unité d'entraînement (UE).

6. Outil motorisé selon la revendication 1, dans lequel le dégagement de fluide relié au canal de fluide (CF) est formé à l'extérieur du logement (LO) de manière à pouvoir être alimenté en fluide de manière externe à l'outil d'usinage (OU).

7. Outil motorisé selon les revendications 2 et 6, dans lequel le canal de fluide est conçu de telle sorte que le fluide peut être amené à l'intérieur et à l'extérieur de l'outil d'usinage (OU).

8. Outil motorisé selon l'une quelconque des revendications 1 à 7, dans lequel le module de capteur (MC) comprend un capteur de liquide et/ou un capteur de pression comme premier capteur.

9. Outil motorisé selon l'une quelconque des revendications 1 à 8, dans lequel le module de capteur (MC) est pourvu d'un couvercle.

10. Outil motorisé selon l'une quelconque des revendications 1 à 9, dans lequel le module de capteur (MC) possède une alimentation (AL).

11. Outil motorisé selon l'une quelconque des revendications 1 à 10, dans lequel le module de capteur (MC) comprend un dispositif pour traiter et/ou stocker des signaux provenant de l'unité de capteur.

12. Outil motorisé selon l'une quelconque des revendications 1 à 11, dans lequel le module de capteur (MC) permet de préférence une transmission de données sans fil, en particulier au moyen d'une interface Bluetooth.

13. Outil motorisé selon l'une quelconque des revendications 1 à 12, dans lequel l'alimentation en fluide (AF) est disposée sur le côté du logement (LO) tourné vers l'unité de commande (UC).
